(19) Europäisches Patentamt / European Patent Office / Office européen des brevets

(11) **EP 3 455 961 B1**

(12) **EUROPEAN PATENT SPECIFICATION**

(45) Date of publication and mention
of the grant of the patent:
**01.07.2020 Bulletin 2020/27**

(21) Application number: **16790690.8**

(22) Date of filing: **10.05.2016**

(51) Int Cl.:
**H04B 10/66** (2013.01)    **H04B 10/67** (2013.01)

(86) International application number:
**PCT/IB2016/001445**

(87) International publication number:
**WO 2017/194988 (16.11.2017 Gazette 2017/46)**

(54) **OPTICAL RECEIVER FOR FULL-FIELD OPTICAL QUADRATURE DEMODULATION**

OPTISCHER EMPFÄNGER FÜR VOLLFLÄCHIGE OPTISCHE QUADRATURDEMODULATION

RÉCEPTEUR OPTIQUE DE DÉMODULATION EN QUADRATURE OPTIQUE PLEIN CHAMP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2019 Bulletin 2019/12**

(73) Proprietors:
• **Université de Rennes 1**
**35065 Rennes Cedex (FR)**
• **Raman Research Institute**
**Karnataka (IN)**

(72) Inventors:
• **FADE, Julien**
**35590 L'Hermitage (FR)**
• **ALOUINI, Mehdi**
**35140 Gosne (FR)**
• **PANIGRAHI, Swapnesh**
**13008 Marseille (FR)**
• **RAMACHANDRAN, Hema**
**Bangalore 560032 (IN)**

(74) Representative: **Cabinet Le Guen Maillet**
**3, impasse de la Vigie**
**CS 71840**
**35418 Saint-Malo Cedex (FR)**

(56) References cited:
**EP-A2- 1 686 707    US-A1- 2011 052 212**

**Description**

**DOMAIN OF THE INVENTION**

The present invention generally relates to an optical receiver for performing full-field optical quadrature (I/Q) demodulation for detecting presence of modulated light signals in a light beam received by said optical receiver.

**BACKGROUND OF THE INVENTION**

In order to cope with demodulation of modulated light signals, two main techniques are in use: lock-in amplification and high-frequency envelope sampling.

The lock-in amplification technique enables detecting a few useful modulated photons among billions of unmodulated background photons. This technique is based on multiplication through a product detector of an incoming modulated light signal with a time-varying reference signal generated by a local oscillator of the same frequency, or with small detuning, so as to obtain modulation amplitude information and/or modulation phase information at each pixel of the captured images. However, in order to correctly demodulate the detected modulated signal in amplitude and phase, the main drawback of this approach is the necessity of a reference signal, locked in phase with the light source generating the modulated signal.

For instance, long distance full-field demodulation of light signals by an optical receiver is a situation in which phase-locking cannot be achieved when the light signals are modulated by respective light sources at various distances (therefore typically implying different respective phases of light signals received by the optical receiver) from the optical receiver.

Moreover, full field demodulation at high frequencies well above camera's frame rate is still a challenging issue, yet required for ballistic photon filtering for instance.

This stresses a need for a full-field solution able to determine magnitude and phase of source light signals spatially distributed in an image, in the shortest possible timeframe although the optical receiver does not implement a phase-locking mechanism enabling phase-locking with the light source signals.

The high-frequency envelope sampling technique samples the incoming modulated signal at rates higher than the modulation frequency, consistent with the Nyquist's theorem, in order to regenerate the envelope of the received modulated light signal at each pixel of an image sensor. This technique suffers from many limitations, the two main shortcomings being: (i) the need of very fast shuttering techniques able to "slice" modulated signal over times much shorter than the modulation period; and (ii) the very low throughput of light, since it is only acquired on short times compared with the modulation period. In recent times, a new class of image sensors have emerged that can sample at frequencies up to 40 MHz using direct sampling of the modulated light. These so-called TOF (Time-Of-Flight) cameras can detect the time-of-flight of a modulated light beam at each pixel at high-frame rates. A class of TOF cameras further samples four intensity values for each pixel and computes phase information using this "four-bucket" sampling technique. However, such TOF cameras still have limited spatial resolution (typically 320x240) to date, and furthermore require specific sensor hardware architecture. Moreover, they still suffer from their low dynamic range, which make them unusable for high sensitivity heterodyne detection, and are limited to applications over few meters. Furthermore, hardware used to perform demodulation is part of the camera sensor itself, which makes difficult the tailoring of this approach towards high sensitivity and high dynamics large focal plane arrays.

The patent application published under reference EP 1 686 707 A2 describes a method and system for demodulating an input signal light subjected to the differential quadrature phase shift keying.

The patent application published under reference US 2011/0552212 A1 describes an optical receiver capable of demodulating a differential quadrature phase shift keying modulated optical signal to a multilevel phase-modulated signal.

It is desirable to overcome the aforementioned drawbacks of the prior art. In particular, it is desirable to provide a solution that allows performing full-field demodulation of modulated light signals without any phase lock-in mechanism.

It is furthermore desirable to provide a solution that allows performing such full-field demodulation at low electronics complexity and at low power cost with low impact on photon budget. It is furthermore desirable to provide a solution that allows performing such full-field demodulation in moving objects situations. It is furthermore desirable to provide a solution that is adapted to real-time applications. It is finally desirable to provide a solution offering possible and easy tunability of the demodulation frequency.

**SUMMARY OF THE INVENTION**

To that end, the present invention concerns an optical receiver for performing quadrature demodulation of modulated light signals, the optical receiver including a first polarizing mechanism for performing a first polarization operation and a second polarizing mechanism for performing second and third polarization operations, a beam-splitting mechanism, an electro-optic modulator, a quarter-wave retarder mechanism, and at least one camera sensor. The optical receiver is such that. the electro-optic modulator is placed between the first polarizing mechanism and the beam-splitting mechanism, wherein: the electro-optic modulator has a fast axis oriented at forty-five degrees with respect to a polarization axis of the first polarizing mechanism, the quarter-wave retarder mechanism has fast and slow axes which have the same orientation as the respective ones of the electro-optic modulator, the second polarizing mechanism is configured to perform the second polarization operation according to a polarization axis identical to the polarization axis of the first polarizing mechanism or orthogonal thereto and to perform the third polarization operation according to a polarization axis identical to the polarization axis of the first polarizing mechanism or orthogonal thereto. Moreover, the beam-splitter mechanism separates incident light beam that is transmitted by the electro-optic modulator such that part of said incident light is transmitted, via the quarter-wave retarder mechanism, to the second polarizing mechanism for incurring at least one polarization operation among the second and third polarization operations and then be imaged on one of the at least one camera sensor so as to obtain a Q-quadrature image, and another part of said incident light is transmitted to the second polarizing mechanism for incurring at least one polarization operation among the second and third polarization operations and then be imaged on one of the at least one camera sensor to obtain an I-quadrature image. Finally, the optical receiver further includes circuitry configured to simultaneously acquire the light beams used to obtain the I-quadrature image and the Q-quadrature image and further configured to perform the full-field quadrature demodulation on the basis of said I-quadrature and Q-quadrature images.

Thus, the optical receiver enables performing full-field demodulation of the modulated light signals without any phase lock-in mechanism, in a single-shot approach. Moreover, the optical receiver allows performing full-field demodulation at low electronics complexity and at low power cost since the image acquisition mostly relies on an optical arrangement, which further has low impact on photon budget. It can further be noted that, thanks to the single-shot approach, the optical receiver is particularly adapted to cases where light sources generating the modulated light signals and/or the optical receiver are moving objects.

According to a particular embodiment, the optical receiver further includes a first converging lens placed between the first polarizing mechanism and the electro-optic modulator so as to form an image at the location of the electro-optic modulator.

Thus, compactness of the optical receiver is improved.

According to a particular embodiment, the beam-splitting mechanism is a cube made from two triangular glass prisms which are glued together at their bases using a resin layer of polyester, or epoxy, or urethane-based adhesive, having a thickness adjusted such that, independently of incident light's polarization state, half of incident light is reflected and consequently output via a face of the cube for then incurring the third polarization operation, and the other half of the incident light is transmitted via another face of the cube for then passing via the quarter-wave retarder mechanism before incurring the second polarization operation, and wherein one camera sensor is used to capture the Q-quadrature image and another camera sensor is used to capture the I-quadrature images. Such camera sensors can either be standard camera sensors, even sensors designed for webcams, or camera sensors with a higher dynamics range when the optical receiver is used within applications requiring camera sensors with such higher dynamics range.

Thus, the optical receiver is easy to implement.

According to a particular embodiment, the beam-splitter is a polarization-insensitive Fresnel biprism. Furthermore, a single camera sensor is used to simultaneously capture the Q-quadrature and I-quadrature images, the Q-quadrature image being captured by one half of the surface of the camera sensor and the I-quadrature image being captured by the other half of the surface of the camera sensor. Such a camera sensor can either be a standard camera sensor, even a sensor designed for webcams, or a camera sensor with a higher dynamics range when the optical receiver is used within applications requiring a camera with such higher dynamics range.

Thus, compactness of the optical receiver is improved.

According to a particular embodiment, the beam-splitting mechanism is achieved by a polarization-insensitive Fresnel biprism and the second polarizing mechanism is achieved by a Wollaston prism, and a single camera sensor is used to simultaneously acquire the light beams used to obtain the Q-quadrature and I-quadrature images, wherein a first transitional image is formed on one quarter of the surface of the camera sensor from light beam having incurred the second polarization operation after having passed via the quarter-wave retarder mechanism, a second transitional image is formed on another quarter of the surface of the camera sensor from light beam having incurred the third polarization operation after having passed via the quarter-wave retarder mechanism, a third transitional image is formed on yet another quarter of the surface of the camera sensor from light beam having incurred the second polarization operation without having passed via the quarter-wave retarder mechanism and a fourth transitional image is formed on yet another quarter of the surface of the camera sensor from light beam having incurred the third polarization operation without having passed via the quarter-wave retarder mechanism. Moreover, the circuitry is further configured to obtain the Q-quadrature image by subtracting, on a per pixel basis, the second transitional image from the first transitional image, and to obtain the I-quadrature image by subtracting, on a per pixel basis, the fourth transitional image from the third transitional image.

Thus, the quadrature demodulation is then less sensitive to continuous background light in the imaged scene and higher dynamics of the demodulated signals is ensured.

According to a particular embodiment, a second converging lens is placed between the electro-optic modulator and the beam-splitting mechanism so as to input collimated light into the beam-splitting mechanism.

Thus, compactness of the optical receiver is improved.

According to a particular embodiment, a single camera sensor is used to simultaneously acquire the light beams used to obtain the Q-quadrature and I-quadrature images, and the beam-splitting mechanism is achieved by dividing the surface of the camera sensor into adjacent macro-pixels, which are 2 x 2 blocks of adjacent pixels, and by applying different optical processes on the pixels of each macro-pixel. Furthermore, the quarter-wave retarder mechanism is achieved by a quarter-wave retarder placed on first and second pixels of each macro-pixel, the second polarization is achieved by a polarizer placed on the first and third pixels of each macro-pixel, the third polarization is achieved by a polarizer placed on the second and fourth pixels of each macro-pixel. Furthermore, the circuitry is further configured to form a first transitional image by gathering the first pixels of all macro-pixels, a second transitional image by gathering the second pixels of all macro-pixels, a third transitional image by gathering the third pixels of all macro-pixels, and a fourth transitional image by gathering the fourth pixels of all macro-pixels. Finally, the circuitry is further configured to obtain the Q-quadrature image by subtracting, on a per pixel basis, the second transitional image from the first transitional image, and to obtain the I-quadrature image by subtracting, on a per pixel basis, the fourth transitional image from the third transitional image.

Thus, the quadrature demodulation is then less sensitive to continuous background light in the imaged scene, and higher dynamics of the demodulated signals is ensured, and compactness of the optical receiver is improved.

According to a particular embodiment, the circuitry of the optical receiver is configured to determine, for each pixel position $p$ of the Q-quadrature and I-quadrature images, information $Inf_a(p)$ representative of a magnitude of a potential modulated light signal present at said pixel position as follows:

$$Inf_a(p) = \sqrt{\left(Int_Q(p)\right)^2 + \left(Int_I(p)\right)^2}$$

wherein $Int_Q(p)$ represents intensity present at said pixel position $p$ in the Q-quadrature image and $Int_I(p)$ represents intensity present at said pixel position $p$ in the I-quadrature image.

Thus, demodulation is easily achieved.

According to a particular embodiment, the circuitry of the optical receiver is configured to determine, for each pixel position at which said magnitude is above a predefined threshold, information $Inf_\varphi(p)$ representative of a phase $\varphi$ of said modulated light signal as follows:

$$Inf_\varphi(p) = \arctan\left(Int_Q(p)/Int_I(p)\right)$$

Thus, demodulation is easily complemented.

According to a particular embodiment, the electro-optic modulator is built from one component among the followings: an electro-optic crystal, an electro-optic polymer, an electro-optic ceramic, an electro-optic liquid cell, and a liquid crystal cell.

Thus, the optical receiver is easy to implement in real-time situations.

According to a particular embodiment, the circuitry of the optical receiver is configured to obtain the Q-quadrature and I-quadrature images, and perform the quadrature demodulation, on a regular basis. Thus real-applications can be targeted since the optical receiver is adapted to perform single-shot quadrature demodulation.

## LIST OF DRAWINGS

The characteristics of the invention will emerge more clearly from a reading of the following description of an example of embodiment, said description being produced with reference to the accompanying drawings, among which:

Fig. 1 schematically represents a first arrangement for acquiring images in quadrature, according to an embodiment of the present invention;
Fig. 2A schematically represents a second arrangement for acquiring images in quadrature, according to another embodiment of the present invention;
Fig. 2B schematically represents how light is imaged on a single camera sensor used in the scope of the second arrangement shown in Fig. 2A;

Fig. 3A schematically represents a third arrangement for acquiring images in quadrature, according to yet another embodiment of the present invention;

Fig. 3B schematically represents how light is imaged on a single camera sensor used in the scope of the third arrangement shown in Fig. 3A;

Fig. 4A schematically represents a fourth arrangement for acquiring images in quadrature, according to yet another embodiment of the present invention;

Fig. 4B schematically represents how light is imaged on macro-pixels of a single camera sensor used in the scope of the fourth arrangement shown in Fig. 4A;

Fig. 4C schematically represents how polarizing and quarter-wave retarder mechanisms are applied to the macro-pixels of the single camera sensor used in the scope of the fourth arrangement shown in Fig. 4A;

Fig. 5 schematically represents an algorithm for performing quadrature demodulation from acquired images in quadrature; and

Fig. 6 schematically represents a circuitry architecture for executing the algorithm of Fig. 5.

## DETAILED DESCRIPTION OF THE INVENTION

The invention relates to an optical receiver arranged for performing full-field optical quadrature demodulation of modulated light signals that may be received by said optical receiver. The light signals may originate from modulated light sources or from objects illuminated by such light sources. Such light signals may also be produced by the interaction of a non-modulated light-source with an object or a physical effect that induces such modulation.

For instance, said light sources are placed on both sides of a landing track and the optical receiver is embedded in an aircraft, so as to help landing the aircraft on the landing track even in noisy / hazy environment by detecting ballistic photons retaining the initial modulation generated by the light sources thus delineating the landing track. Another example where full-field demodulation is required is three-dimensional imaging using a modulated illumination, and where the distance of the objects (third dimension) is directly retrieved from the phase information of the demodulated signal at each pixel. Another example is full-field imaging vibrometry, where vibration modes of a given object/scene are displayed in real time. The optical receiver according to the invention can be used in other circumstances in which modulated light signals have to be demodulated.

The optical receiver according to the invention includes a first polarizing mechanism for performing a first polarization operation and a second polarizing mechanism for performing second and third polarization operations, a beam-splitting mechanism, an electro-optic modulator, a quarter-wave retarder mechanism, and at least one camera sensor. Hereafter are presented, in particular, different arrangements of the second polarizing mechanism, of the beam-splitting mechanism and of the quarter-wave retarder mechanism. In these different arrangements, the electro-optic modulator has a fast axis oriented at forty-five degrees with respect to a polarization axis of the first polarizing mechanism, the quarter-wave retarder mechanism has a fast axis and a slow axis which have the same orientation as the respective ones of the electro-optic modulator. Moreover, the second polarizing mechanism is configured to perform the second polarization operation according to a polarization axis with the same orientation as the polarization axis of the first polarizing mechanism or according to a polarization axis orthogonal to the polarization axis of the first polarizing mechanism. The second polarizing mechanism is also configured to perform the third polarization operation according to a polarization axis with the same orientation as the polarization axis of the first polarizing mechanism or according to a polarization axis orthogonal to the polarization axis of the first polarizing mechanism. It means that the orientation of the polarization axes used for the second and third polarization operations may be identical or orthogonal. Moreover, in these different arrangements, the beam-splitter mechanism separates incident light beam that is transmitted by the electro-optic modulator such that part of said incident light is transmitted, via the quarter-wave retarder mechanism, to the second polarizing mechanism for incurring at least one polarization operation among the second and third polarization operations and then be imaged on one of the at least one camera sensor so as to obtain a Q-quadrature image, and another part of said incident light is transmitted to the second polarizing mechanism for incurring at least one polarization operation among the second and third polarization operations and then be imaged on one of the at least one camera sensor to obtain an I-quadrature image. Finally, the optical receiver according to the invention further includes circuitry configured to simultaneously acquire the light beams used to obtain the I-quadrature and Q-quadrature images and to perform quadrature demodulation on the basis thereof.

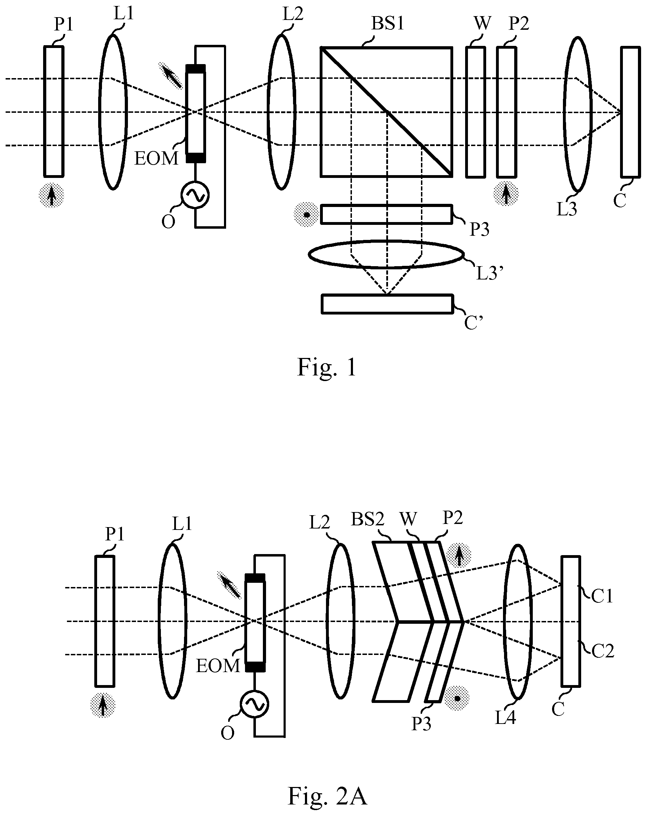

**Fig. 1** schematically represents a first arrangement for acquiring images in quadrature, according to an embodiment of the present invention.

The first arrangement shown in Fig. 1 comprises a first polarizer P1 forming the aforementioned first polarizing mechanism, used to perform the first polarization operation. The polarization axis of the first polarizer P1 matches the polarization of the light signals to be demodulated, in case the light signals to be demodulated are polarized. The polarization axis of the first polarizer P1 is represented by a vertical arrow in Fig. 1.

The first arrangement further comprises an electro-optic modulator EOM, which is understood herein as an electro-optic birefringent component with electrodes having appropriate geometry so as to induce controlled optical phase anisotropy (birefringence) between two directions of a transverse plane orthogonal to the direction of propagation of the light beam, and which has a fast axis (represented by a tilted arrow in Fig. 1) oriented at forty-five degrees with respect to the polarization axis of the first polarizer P1. It can be noted that the electro-optic modulator EOM inherently has slow axis oriented at ninety degrees with respect to the fast axis thereof.

In many applications, the incoming modulated light signals are not polarized, having thus no predominant polarization state, and in that case, there is no specific constraint on the polarization axis of the first polarizer P1 with respect to the polarization of the light signals to be demodulated, only a relative constraint with respect to the fast axis (and inherently the slow axis) of the electro-optic modulator EOM.

The electro-optic modulator EOM has controllable light transmission, which is driven electrically by an oscillator O. The oscillator O provides the electro-optic modulator EOM with a voltage, or current, signal oscillating at a modulation reference frequency. The modulation reference frequency is set up to be within a predefined range R around the theoretical modulating frequency of the light signals to be demodulated. The modulation reference frequency may hence be equal to the theoretical modulating frequency of the light signals to be demodulated. The oscillator O can be external to the optical receiver and connected thereto.

The electro-optic modulator EOM is for instance built from an electro-optic crystal, or an electro-optic polymer, or an electro-optic ceramic, or an electro-optic liquid cell, or a liquid crystal cell.

The electro-optic modulator EOM is preferably placed at a location, within the first arrangement shown in Fig. 1, at which an (intermediate) image is formed. In order to ease the manufacturing and tuning of the first arrangement with respect to the effective location of the (intermediate) image, a first converging lens L1 is preferably placed between the first polarizer P1 and the electro-optic modulator EOM so as to form the (intermediate) image at the location of the electro-optic modulator EOM. Compactness of the optical receiver is thus improved.

The light transmitted by the electro-optic modulator EOM is injected in a first beam-splitter BS1 so as two create two distinct image transmission channels for transporting the light transmitted by the electro-optic modulator EOM. The first beam-splitter BS1 forms the aforementioned beam-splitting mechanism. In order to ease the manufacturing and tuning of the first arrangement with respect to the effective location of the first beam-splitter BS1, a second converging lens L2 is preferably placed between the electro-optic modulator EOM and the first beam-splitter BS1, so as to input collimated light into the first beam-splitter BS1. Compactness of the optical receiver is thus improved.

The first beam-splitter BS1 used in the first arrangement shown in Fig. 1 is polarization-insensitive and is more particularly a cube made from two triangular glass prisms which are glued together at their bases using a resin layer of polyester, or epoxy, or urethane-based adhesive. The thickness and optical properties of the resin layer is adjusted such that half of incident light is reflected and consequently output via a face of the cube (typically orthogonal to the face via which the incident light is received), and the other half of the incident light is transmitted via another face of the cube (typically opposite to the face via which the incident light is received), independently of the polarization state of the incident light. Other kinds of polarization-insensitive beam-splitter can be used as far as the incident light is split into two copies that can further be independently handled, like for instance presented hereafter with regard to Fig. 2A.

The first arrangement shown in Fig. 1 further comprises a quarter-wave plate W via which the light transmitted by the first beam-splitter BS1 passes. The quarter-wave plate W forms the aforementioned quarter-wave retarder mechanism. The fast axis and the slow axis of the quarter-wave plate W have the same orientation as the respective ones of the electro-optic modulator EOM.

The first arrangement shown in Fig. 1 further comprises a second polarizer P2 via which the light transmitted by the quarter-wave plate W passes.

The first arrangement shown in Fig. 1 further comprises a third converging lens L3 and a first camera sensor C, placed such that the light transmitted by the second polarizer P2 passes via the third converging lens L3 and is imaged on the first camera sensor C. The first arrangement shown in Fig. 1 further comprises a third polarizer P3 via which the light reflected by the first beam-splitter BS1 passes. The first arrangement shown in Fig. 1 further comprises a fourth converging lens L3' and a second camera sensor C', placed such that the light transmitted by the third polarizer P3 passes via the fourth converging lens L3' and is imaged on the second camera sensor C'. The second polarizer P2 and the third polarizer P3 jointly form the aforementioned second polarizing mechanism, wherein the second polarizer P2 is used to perform the aforementioned second polarization operation and the third polarizer P3 is used to perform the aforementioned third polarization operation.

Each one of the second and third polarization operations is performed according to a polarization axis that has either the same orientation as the polarization axis of the first polarizer P1 or an orientation that is orthogonal to the polarization axis of the first polarizer P1. The second and third polarization operations may therefore be done according to identical orientations of their respective polarization axes or may be done according to orthogonal orientations of their respective polarization axes.

In a preferred embodiment of the first arrangement shown in Fig. 1, the polarization axis of the second polarizer P2 has the same orientation as the polarization axis of the first polarizer PI, and is consequently represented by a vertical arrow in Fig. 1, and the polarization axis of the third polarizer P3 has an orientation that is orthogonal to the polarization axis of the first polarizer PI, and is consequently represented by a bold dot in Fig. 1. It avoids having later on to adjust by $\pi$ the phase $\varphi$ of detected modulated light signals when completing the quadrature demodulation.

The camera sensors C and C' are synchronized so as to capture respective images at the same time. Thus, the images simultaneously obtained by the camera sensors C and C' are in quadrature, the images captured by the first camera sensor C being referred to as Q-quadrature images and the images captured by the second camera sensor C' being referred to as I-quadrature images. The light beams to respectively form the Q-quadrature images and the I-quadrature images do not overlap during capture. The images thus captured by the camera sensors C and C' are then stored in memory for further processing, as detailed hereafter. The camera sensors C and C', to date, typically offer standard frame rates of about tens to thousands of images per second (10 Hz-1 kHz).

The whole optical arrangement comprising the electro-optic modulator EOM thus acts as a shuttering mechanism so as to perform product detection based on an heterodyne demodulation approach. Indeed, since there is no locking of the modulation reference frequency of the oscillator O with the effective modulating frequency of the light signals to be demodulated, a mismatch $\Delta\omega$ may exist between the effective modulating frequency of the light signals to be demodulated and the modulation reference frequency of the oscillator O. In that case, the resulting I-quadrature image and Q-quadrature image show a temporal modulation at a frequency equal to the mismatch $\Delta\omega$, which can still be handled by the camera sensors C and C' provided that the effective frame rates of the camera sensors C and C' are fast enough to allow sampling the mismatch $\Delta\omega$ (fulfillment of the Nyquist-Shannon theorem). The aforementioned range R around the theoretical modulating frequency of the light signals to be demodulated in which the modulation reference frequency has to be set up is therefore such that the effective frame rates of the camera sensors C and C' are sufficiently high for sampling the mismatch $\Delta\omega$ (fulfillment of the Nyquist-Shannon theorem).

Thanks to the use of the quarter-wave retarder mechanism (the quarter-wave plate W in the first arrangement shown in Fig. 1), the images captured by the first camera sensor C depends on $\sin(\Delta\varphi)$, whereas the images captured by the second camera sensor C' depends on $\cos(\Delta\varphi)$, wherein $\Delta\varphi$ represents a phase difference between the modulation reference frequency of the oscillator O and the effective modulating frequency of the light signals to be demodulated. Since the optical receiver is configured to perform single-shot quadrature demodulation, constraints on the stability of the relative phase difference $\Delta\varphi$ are low, since the relative phase difference $\Delta\varphi$ only has to be stable within the integration time of the light beam by the camera sensors C and C', which can be of the order of one hundred microseconds (100 $\mu$s).

The electro-optic modulator EOM configured as described with regard to Fig. 1 thus allows performing product detection by using two standard cameras, even webcams, whatever being the modulation frequency of the modulated signals to be detected. Cameras with higher dynamics range can also be used when the optical receiver is used within applications requiring such cameras with higher dynamics range.

**Fig. 2A** schematically represents a second arrangement for acquiring images in quadrature, according to another embodiment of the present invention.

The second arrangement shown in Fig. 2A comprises the first polarizer P1. The second arrangement further comprises the electro-optic modulator EOM driven by the oscillator O. The second arrangement may further comprise the first converging lens L1 and the second converging lens L2. The first polarizer P1 and the electro-optic modulator EOM, as well as potentially the first converging lens L1 and/or the second converging lens L2, are configured in the second arrangement shown in Fig. 2A in the same way as in the first arrangement shown in Fig. 1.

The second arrangement shown in Fig. 2A further comprises a second beam-splitter BS2, instead of the first beam-splitter BS1 (the second converging lens L2, when present, being thus placed between the electro-optic modulator EOM and the second beam-splitter BS2), so as two create two distinct image transmission channels for transporting the light transmitted by the electro-optic modulator EOM. The second beam-splitter BS2 thus forms the aforementioned beam-splitting mechanism. The second beam-splitter BS2 is polarization-insensitive and is more particularly a Fresnel biprism. The second beam-splitter BS2 creates two beams from the incident light transmitted by the electro-optic modulator EOM (and potentially collimated by the second converging lens L2).

The second arrangement shown in Fig. 2A further comprises the quarter-wave plate W, the second polarizer P2 and the third polarizer P3, as well as the camera sensor C.

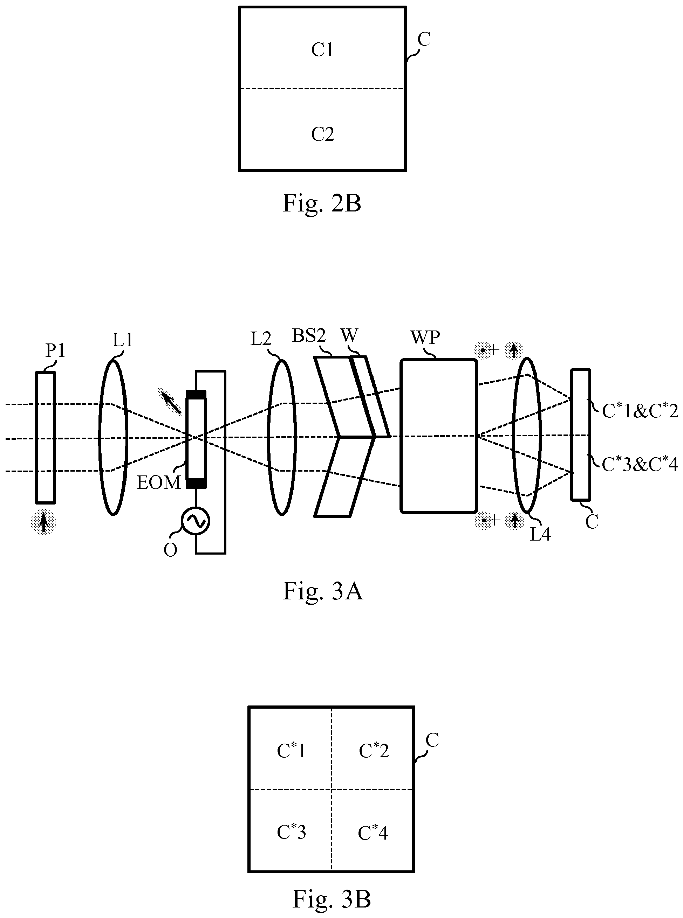

One of the two beams created by the second beam-splitter BS2 passes via the quarter-wave plate W and then via the second polarizer P2. The other one of the two beams created by the second beam-splitter BS2 passes via the third polarizer P3. The second arrangement shown in Fig. 2A further comprises a fifth converging lens L4 and the camera sensor C, placed such that the light transmitted by the second polarizer P2 passes via the fifth converging lens L4 and is imaged on one half C1 of the camera sensor C and further such that the light transmitted by the third polarizer P3 passes via the fifth converging lens L4 and is imaged on the other half C2 of the camera sensor C. Thus, the second arrangement shown in Fig. 2A allows having simultaneously the in-quadrature images on a single camera sensor. **Fig. 2B** schematically shows how the in-quadrature images are formed on the surface of the camera sensor C.

The second arrangement shown in Fig. 2A is such that the light beams to respectively form the Q-quadrature images and the I-quadrature images do not overlap during capture. For that purpose, a field mask may be inserted in the optical setup, at a location at which an (intermediate) image is formed, so as to avoid superposition of the Q-quadrature image and the I-quadrature image on the surface of the camera sensor C. Such a field mask can be formed by the limited thickness of the electro-optical modulator EOM, when the electro-optical modulator EOM is placed at a location at which the (intermediate) image is formed.

In comparison with the first arrangement shown in Fig. 1, the second arrangement shown in Fig. 2A does not require synchronizing capture operations performed by distinct camera sensors. A counterpart is that it reduces the size of the processed final image by a factor of two and that pre-processing has to be performed to exploit the images, since the images captured by the camera sensor C in the second arrangement shown in Fig. 2A need to be split in half in order to perform the quadrature demodulation.

As for the first arrangement shown in Fig. 1, thanks to the use of the quarter-wave plate W, the images captured by the camera sensor C in the second arrangement shown in Fig. 2A depends on $\sin(\Delta\varphi)$ on one half of the surface of the camera sensor C and on $\cos(\Delta\varphi)$ on the other half of the surface of the camera sensor C. Both halves of each image captured by the camera sensor C are thus in quadrature. The images thus captured by the camera sensor C are then stored in memory for further processing, as detailed hereafter.

**Fig. 3A** schematically represents a third arrangement for acquiring images in quadrature, according to yet another embodiment of the present invention.

The third arrangement shown in Fig. 3A comprises the first polarizer P1. The third arrangement further comprises the electro-optic modulator EOM driven by the oscillator O. The third arrangement may further comprise the first converging lens L1 and the second converging lens L2. The third arrangement further comprises the second beam-splitter BS2 and the quarter-wave plate W. The first polarizer PI, the electro-optic modulator EOM, the second beam-splitter BS2, and the quarter-wave plate W, as well as potentially the first converging lens L1 and/or the second converging lens L2, are configured in the third arrangement shown in Fig. 3A in the same way as in the second arrangement shown in Fig. 2A.

In the third arrangement shown in Fig. 3, the optical receiver further comprises a Wollaston prism WP. The Wollaston prism WP forms the aforementioned second polarizing mechanism (second and third polarization operations) and is thus used in replacement of the second P2 and third P3 polarizers of the second arrangement shown in Fig. 2. The Wollaston prism WP is thus placed so as to receive both light beams that are received by respectively the second P2 and third P3 polarizers of the second arrangement shown in Fig. 2. In addition to its polarizing effect, the Wollaston prism WP has an additional effect of beam-splitting. Since two incident light beams are input to the Wollaston prism WP following the upstream beam-splitting operation performed by the second beam-splitter BS2, four light beams are output from the Wollaston prism WP.

The third arrangement shown in Fig. 3A further comprises the fifth converging lens L4 and the camera sensor C, placed such that the four light beams transmitted by the Wollaston prism WP are imaged on four distinct areas C*1, C*2, C*3 and C*4 of the camera sensor C, as schematically shown in **Fig. 3B.** Each one of the areas C*1, C*2, C*3 and C*4 represents one quarter of the surface of the camera sensor C. Contrary to the light beams imaged on the areas C*3 and C*4, the light beam imaged on the areas C*1 and C*2 have passed through the quarter-wave plate W.

Moreover, the Wollaston prism WP is set up such that the light beam imaged on the area C*2 has orthogonal polarization compared with the light beam imaged on the area C*1, and such that the light beam imaged on the area C*4 has orthogonal polarization compared with the light beam imaged on the area C*3. For instance, the that the light beams imaged on the areas C*1 and C*3 have incurred a polarization operation according to a polarization axis identical to the polarization axis of the first polarizer PI, and the light beams imaged on the areas C*2 and C*4 have incurred a polarization operation according to a polarization axis orthogonal to the polarization axis of the first polarizer P1. The reverse situation can also be set up.

The Q-quadrature image is formed by subtracting, on a per pixel basis, the image formed on the area C*2 from the image formed on the area C*1, and the I-quadrature image is formed by subtracting, on a per pixel basis, the image formed on the area C*4 from the image formed on the area C*3. Thus, in order to obtain the Q-quadrature image and the I-quadrature image, pre-processing has to be performed since the images captured by the camera sensor C in the third arrangement shown in Fig. 3A need to be split and since the aforementioned subtracting operations have then to be performed to finally obtain the in-quadrature images to be used for performing the full-field quadrature demodulation.

As for the second arrangement shown in Fig. 2A, thanks to the use of the quarter-wave plate W, the images captured by the camera sensor C in the third arrangement shown in Fig. 3A depends on $\sin(\Delta\varphi)$ for what concerns the areas C*1 and C*2, and on $\cos(\Delta\varphi)$ for what concerns the areas C*3 and C*4. The images thus captured by the camera sensor C are then stored in memory for further processing, as detailed hereafter.

As for the second arrangement shown in Fig. 2A, a field mask may be inserted in the optical setup of the third arrangement shown in Fig. 3A, in order to avoid images overlap on the surface of the camera sensor C.

In comparison with the second arrangement shown in Fig. 2A, the third arrangement shown in Fig. 3A further reduces the size of the processed final image by a factor of two (factor of four compared with the first arrangement shown in Fig. 1). A counterpart advantage achieved by the third arrangement shown in Fig. 3A is that, thanks to the aforementioned subtracting operations, the quadrature demodulation is then less sensitive to continuous background light in the imaged scene and higher dynamics of the demodulated signals is ensured.

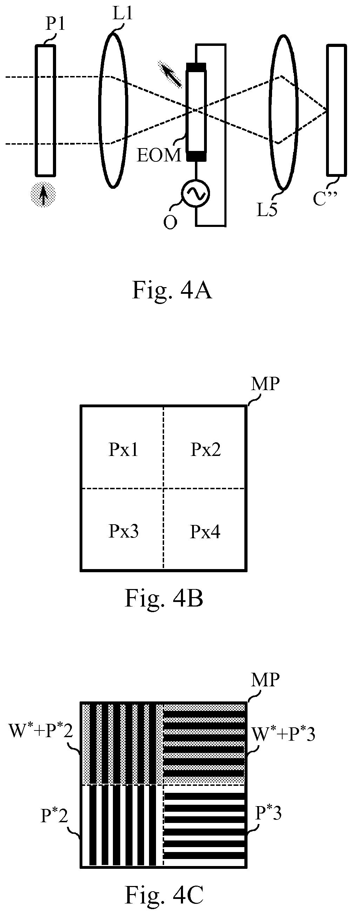

**Fig. 4A** schematically represents a fourth arrangement for acquiring images in quadrature, according to yet another embodiment of the present invention.

The fourth arrangement shown in Fig. 4A comprises the first polarizer P1. The fourth arrangement further comprises the electro-optic modulator EOM driven by the oscillator O. The fourth arrangement may further comprise the first converging lens L1.

The fourth arrangement shown in Fig. 4A further comprises a third camera sensor C" that integrates the aforementioned beam-splitting mechanism, the aforementioned second polarizing mechanism and the aforementioned quarter-wave retarder mechanism. More particularly, the surface of the camera sensor C" is divided into adjacent macro-pixels. Each macro-pixel is a 2 x 2 block of adjacent pixels, as shown in **Fig. 4B,** wherein a macro-pixel MP is represented as a 2 x 2 block of adjacent pixels Px1, Px2, Px3 and Px4. The beam-splitting mechanism is achieved by applying different optical processes on the pixels of each macro-pixel MP of the camera sensor C", as shown in **Fig. 4C.** In addition, the fourth arrangement shown in Fig. 4A further comprises a sixth converging lens L5 placed such that the light transmitted by the electro-optic modulator EOM passes via the sixth converging lens L5 and is imaged on the camera sensor C".

As shown in **Fig. 4C,** a polarizer P*2 is placed onto the pixels Px1 and Px3 of each macro-pixel MP, wherein the polarizer P*2 has identical polarizing characteristics as the second polarizer P2 of the first and second arrangements respectively shown in Figs. 1 and 2. Moreover, a polarizer P*3 is placed onto the pixels Px2 and Px4 of each macro-pixel MP, wherein the polarizer P*3 has identical polarizing characteristics as the third polarizer P3 of the first and second arrangements respectively shown in Figs. 1 and 2. The polarizers P*2 and P*3 may be micro-grid polarizers, or made of polyvinyl alcohol, or made of patterned liquid-crystal polymer. Such polarizers have already been addressed in the document "Liquid crystal polymer full-stokes division of focal plane polarimeter", Graham Myhre et al, Optics Express Vol. 20, Issue 25, pp. 27393-27409, OSA Publishing, Nov. 2012. Finally, a quarter-wave retarder W* is placed onto the pixels Px1 and Px2 of each macro-pixel MP, wherein the quarter-wave retarder W* has identical quarter-wave retarding characteristics as the quarter-wave plate W. The aforementioned second polarizing mechanism and the aforementioned quarter-wave retarder mechanism are thus distributed over the pixels of the camera sensor C".

Upon capture, the optical receiver forms transitional images as follows:

- gathering the pixels Px1 of all macro-pixels MP into a first transitional image; the first transitional image matches the image that would be captured on the area C*1 if the third arrangement shown in Fig. 3A were used;
- gathering the pixels Px2 of all macro-pixels MP into a second transitional image; the second transitional image matches the image that would be captured on the area C*2 if the third arrangement shown in Fig. 3A were used;
- gathering the pixels Px3 of all macro-pixels MP into a third transitional image; the third transitional image matches the image that would be captured on the area C*3 if the third arrangement shown in Fig. 3A were used; and
- gathering the pixels Px4 of all macro-pixels MP into a fourth transitional image; the fourth transitional image matches the image that would be captured on the area C*4 if the third arrangement shown in Fig. 3A were used.

The Q-quadrature image is formed by subtracting, on a per pixel basis, the second transitional image from the first transitional image, and the I-quadrature image is formed by subtracting, on a per pixel basis, the fourth transitional image from the third transitional image. Thus, in order to obtain the Q-quadrature image and the I-quadrature image, pre-processing has to be performed subtracting operations are performed since the aforementioned transitional images have to be formed and since the aforementioned subtracting operations have then to be performed to finally obtain the in-quadrature images to be used for performing the full-field quadrature demodulation.

Thanks to the use of the quarter-wave retarder W* distributed over the macro-pixels of the camera sensor C", the images captured by the camera sensor C" in the fourth arrangement shown in Fig. 4A depends on $\sin(\Delta\varphi)$ for what concerns the first and second transitional images, and on $\cos(\Delta\varphi)$ for what concerns the third and fourth transitional image. The images thus captured by the camera sensor C are then stored in memory for further processing, as detailed hereafter.

As for the second and third arrangements respectively shown in Figs. 2A and 3A, a field mask may be inserted in the optical setup of the fourth arrangement shown in Fig. 4A, in order to avoid images overlap on the surface of the camera sensor C.

As with the third arrangement shown in Fig. 3A, the fourth arrangement shown in Fig. 4A allows achieving quadrature demodulation that is less sensitive to continuous background light in the imaged scene and higher dynamics of the demodulated signals is ensured. Compactness of the optical receiver is advantageously improved compared with the third arrangement shown in Fig. 3A.

In any one of the arrangements shown in Figs. 1, 2A, 3A and 4A described hereinbefore, the optical receiver may further include a filter F, placed upstream of the electro-optic modulator EOM and preferably placed upstream of the first converging lens L1. The filter F is adapted to limit the light beam input to the electro-optic modulator EOM to a spectrum band inline with the sensitivity of the electro-optic modulator EOM and of the quarter-wave retarder mechanism. It allows reducing the contribution of the ambient light when performing images captures, and further allows reducing the influence of inherent dispersion in the beam-splitting mechanism and in the quarter-wave retarder mechanism when capturing the images. Therefore, chromatic aberrations are reduced.

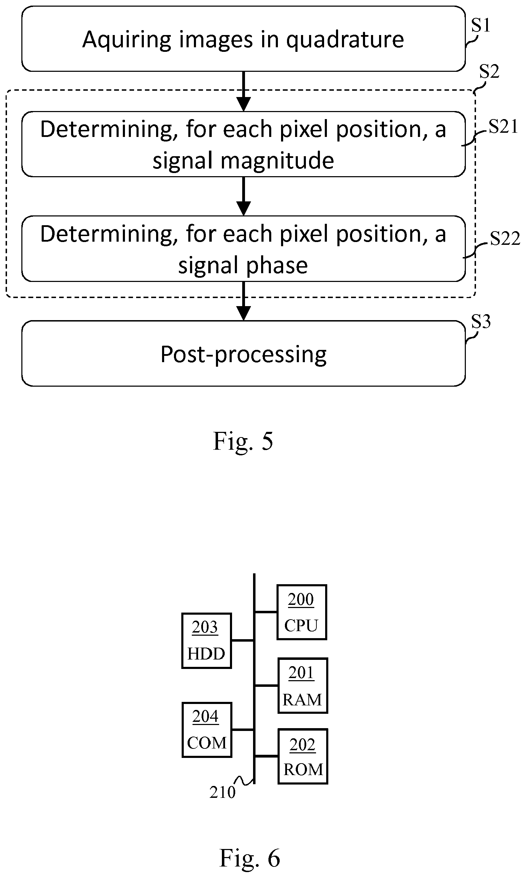

After having captured images, either simultaneously by using the two camera sensors C and C' with the first arrangement shown in Fig. 1, or simultaneously by using solely the camera sensor C with the second arrangement shown in Fig. 2A or the third arrangement shown in Fig. 3A, or simultaneously by using solely the camera sensor C" with the fourth arrangement shown in Fig. 4A, further processing can be performed so as to determine, on a per pixel basis, information representative of the magnitude of the modulated light signals that may be detected, as well as, if need be, information representative of the phase $\varphi$ of said modulated light signals. This aspect is detailed hereafter with regard to Fig. 5.

The optical receiver configured as described with regard to Fig. 2A, or Fig. 3A, or Fig. 4A, thus allows performing product detection by using a single standard camera, whatever being the modulation frequency of the modulated signals to be detected.

**Fig. 5** schematically represents an algorithm for performing quadrature demodulation from acquired images in quadrature.

In a step S1, the optical receiver acquires images in quadrature. The images in quadrature are acquired by use of either the first arrangement shown in Fig. 1, or the second arrangement shown in Fig. 2A, or the second arrangement shown in Fig. 3A, or the second arrangement shown in Fig. 4A, as detailed hereinbefore. The images in quadrature are acquired by transmission of a control signal to the first camera sensor C in the second arrangement shown in Fig. 2A or in the second arrangement shown in Fig. 3A, to the third camera sensor C" in the fourth arrangement shown in Fig. 4A, or simultaneously to the camera sensors C and C' in the first arrangement shown in Fig. 1. Quadrature demodulation can be performed by relying on a single snapshot of images in quadrature. Full-field quadrature demodulation is achieved by acquiring at the same time all pixels of the images in quadrature needed for performing the quadrature demodulation.

When the second arrangement shown in Fig. 2A is used, as already mentioned, the captured images have to be split in half in order to obtain the images in-quadrature, and the optical receiver has to perform pre-processing to do so. The optical receiver thus extracts, from the captured image, the pixels corresponding to the half of the camera sensor C hit by the light transmitted by the second polarizer P2. These pixels form the acquired Q-quadrature image to be used for the quadrature demodulation. The optical receiver further extracts, from the captured image, the pixels corresponding to the other half of the camera sensor C hit by the light transmitted by the third polarizer P3. These pixels form the acquired I-quadrature image to be used for the quadrature demodulation.

When the third arrangement shown in Fig. 3 is used, as already mentioned, the captured images have to be split in four equal parts and then subtracting operations have be performed in order to obtain the images in-quadrature, and the optical receiver has to perform pre-processing to do so. The optical receiver thus extracts, from the captured image, the pixels corresponding to the area C*1 of the camera sensor C and the pixels corresponding to the area C*2 of the camera sensor C, and further perform the subtracting operation for obtaining the Q-quadrature image to be used for the quadrature demodulation. The optical receiver further extracts, from the captured image, the pixels corresponding to the area C*3 of the camera sensor C and the pixels corresponding to the area C*4 of the camera sensor C, and further perform the subtracting operation for obtaining the I-quadrature image to be used for the quadrature demodulation.

When the fourth arrangement shown in Fig. 2A is used, as already mentioned, the pixels of the captured images have to be gathered to form the four aforementioned transitional images and then subtracting operations have be performed in order to obtain the images in-quadrature, and the optical receiver has to perform pre-processing to do so. The optical receiver thus extracts, from the captured image, the pixel Px1 of all the macro-pixels MP of the captured image so as to form the first transitional image and the pixel Px2 of all the macro-pixels MP of the captured image so as to form the second transitional image, and further perform the subtracting operation for obtaining the Q-quadrature image to be used for the quadrature demodulation. The optical receiver thus extracts, from the captured image, the pixel Px3 of all the macro-pixels MP of the captured image so as to form the third transitional image and the pixel Px4 of all the macro-pixels MP of the captured image so as to form the fourth transitional image, and further perform the subtracting operation for obtaining the I-quadrature image to be used for the quadrature demodulation.

In a following step S2, the optical receiver performs quadrature demodulation on the basis of the acquired images in quadrature. The step S2 comprises two substeps S21 and S22. In the step S21, the optical receiver determines, for each pixel position $p$, information $Inf_a(p)$ representative of the magnitude of a potential modulated light signal present at said pixel position. The information representative of the magnitude of said potential modulated light signal can be obtained as follows:

$$Inf_a(p) = \sqrt{\left(Int_Q(p)\right)^2 + \left(Int_I(p)\right)^2}$$

wherein $Int_Q(p)$ represents the intensity present at said pixel position $p$ in the Q-quadrature image acquired in the step S1 and $Int_I(p)$ represents the intensity present at said pixel position $p$ in the I-quadrature image acquired in the step S1. A modulated signal is detected at said pixel position $p$ when the information $Inf_a(p)$ representative of the magnitude of said potential modulated light signal thus obtained is above a predefined threshold TH, which can be null. In the step S22, the optical receiver determines, for each pixel position at which a modulated light signal has been detected, information $Inf_\varphi(p)$ representative of the phase $\varphi$ of said modulated light signal. The information $Inf_\varphi(p)$ representative of the phase $\varphi$ of the detected modulated light signal can be obtained using an arctangent operation as follows:

$$Inf_\varphi(p) = \arctan\left(Int_Q(p)/Int_I(p)\right)$$

since the Q-quadrature image acquired in the step S1 depends on $\sin(\varphi)$ and the I-quadrature image simultaneously acquired in the step S1 depends on $\cos(\varphi)$.

It has to be noted that the quadrature demodulation may consist solely of detecting the potential presence of a modulated light signal with respect to each pixel of the field of the images in quadrature captured by the optical receiver.

In a following step S3, the optical receiver performs post-processing on the basis of the quadrature demodulation, *i.e.* on the basis of the information representative of the magnitude of modulated light signals that might have been detected from the images in-quadrature acquired in the step S1 and potentially further on the basis of the information representative of the phase of modulated light signals that might have been detected from the images in-quadrature acquired in the step S1.

In a particular embodiment, the optical receiver is configured to obtain the Q-quadrature and I-quadrature images, and perform the quadrature demodulation, on a regular basis, in order to cope with real-time applications needs.

Said post-processing is defined according to a scenario in which the optical receiver is used. For example, let's consider an aircraft that is equipped with such an optical receiver and that is about to land on a landing track equipped by modulated (potentially blinking) light sources, placed on both sides thereof, generating modulated light signals. The optical receiver acquires on a regular basis, e.g. every second, in-quadrature images as detailed hereinbefore. The optical receiver then provides to a display device an image in which each pixel position at which a modulated signal has been detected is marked in a particular way, so as to help delineating the landing track during landing. Another example is three-dimensional imaging using a modulated illumination, and where the distance of the objects (third dimension) is directly retrieved from the phase information of the demodulated signal at each pixel. The optical receiver acquires on a regular basis, e.g. every second, in-quadrature images as detailed hereinbefore. The optical receiver then provides to a display device an image in which the distance map of each pixel position is retrieved from the demodulated phase information, so as to provide a three-dimensional representation of the imaged scene. Another example is full field vibrometry imaging where vibration modes of the object/scene are displayed after having performed quadrature demodulation. In this case, object/scene illumination can be continuous. Temporal modulation of light is produced in this case by vibrating parts of the objects/scene, at locations and at frequencies depending on spatial vibration modes of the object/scene. Spatial repartition of the vibration eigenmode at a given frequency is revealed by a demodulated image obtained using an oscillator O operating at the corresponding frequency. The frequency evolution of the spatial repartition of the vibration eigenmodes is successively revealed by scanning the demodulation frequency over a desired frequency range and acquiring corresponding demodulated images, thereby providing full-field vibrometry analysis of the object/scene.

Other post-processing can be performed depending on the scenario in which the optical receiver is used.

**Fig. 6** schematically represents a circuitry architecture for executing the algorithm of Fig. 5.

According to the shown circuitry architecture, the optical receiver comprises the following components interconnected by a communications bus 210: a processor, microprocessor, microcontroller or CPU (Central Processing Unit) 200; a RAM (Random-Access Memory) 201; a ROM (Read-Only Memory) 202; an SD (Secure Digital) card reader 203, or an HDD (Hard Disk Drive), or any other device adapted to read information stored on a storage medium; and a communication interface COM 204. CPU 200 is capable of executing instructions loaded into RAM 201 from ROM 202 or from an external memory, such as an SD card, or from a communication network to which the optical receiver is connected via the communication interface COM 204. After the optical receiver has been powered on, CPU 200 is capable of reading instructions from RAM 201 and executing these instructions. The instructions form a computer program that causes CPU 200 to perform the steps of the algorithm described hereinbefore with regard to Fig. 5.

The images in quadrature acquired by the optical receiver are stored in RAM 201, or in an external memory, such as an SD card, or in a memory accessed by the optical receiver via a communication network to which the optical receiver is connected via the communication interface COM 204. Further processing, including quadrature demodulation, is then performed by CPU 200 on the basis of the images in quadrature thus stored, by executing the steps of the algorithm described hereinbefore with regard to Fig. 5.

The steps of the algorithm described hereinbefore with regard to Fig. 5 are thus implemented in software form by execution of a set of instructions or program by a programmable computing machine, such as a PC (Personal Computer), a DSP (Digital Signal Processor) or a microcontroller.

In a variant, the steps of the algorithm described hereinbefore with regard to Fig. 5 are implemented in hardware form by a machine or a dedicated component, such as an FPGA (Field-Programmable Gate Array) or an ASIC (Application-Specific Integrated Circuit). In this case, the machine or dedicated component comprises memory, or is connected to such a memory, in which the images in quadrature acquired by the optical receiver are stored for further processing, including quadrature demodulation, by said machine or dedicated component.

In another variant, some steps of the algorithm described hereinbefore with regard to Fig. 5 are performed in software form by relying on the circuitry architecture shown in Fig. 6 and the remaining steps of the algorithm described hereinbefore with regard to Fig. 5 are performed in hardware form by a machine or a dedicated component.

Since the optical receiver as described herein acquires the images in quadrature by relying mostly on optical elements, such optical receiver has potential to be portable with moderate power requirements. Moreover, since the optical receiver as described herein acquires the images in quadrature in a single-shot fashion, the optical receiver is particularly adapted to real-time quadrature demodulation, which is especially relevant in a scenario in which the optical receiver and/or the light sources generating the modulated light signals are moving relatively to each other.

**Claims**

1. An optical receiver for performing full-field quadrature demodulation of modulated light signals, the optical receiver including a first polarizing mechanism (P1) for performing a first polarization operation and a second polarizing mechanism (P2, P3) for performing second and third polarization operations, a beam-splitting mechanism (BS1; BS2), an electro-optic modulator (EOM), a quarter-wave retarder mechanism (W; W*), and at least one camera sensor (C, C'; C"),
   wherein the electro-optic modulator (EOM) is placed between the first polarizing mechanism (P1) and the beam-splitting mechanism (BS1; BS2),
   wherein the electro-optic modulator (EOM) has a fast axis oriented at forty-five degrees with respect to a polarization axis of the first polarizing mechanism (P1), the quarter-wave retarder mechanism (W; W*) has fast and slow axes which have the same orientation as the respective ones of the electro-optic modulator (EOM), the second polarizing mechanism (P2, P3; P*2, P*3) is configured to perform the second polarization operation according to a polarization axis identical to the polarization axis of the first polarizing mechanism (P1) or orthogonal thereto and to perform the third polarization operation according to a polarization axis identical to the polarization axis of the first polarizing mechanism (P1) or orthogonal thereto,
   wherein the beam-splitter mechanism (BS1, BS2) separates incident light beam that is transmitted by the electro-optic modulator (EOM) such that part of said incident light is transmitted, via the quarter-wave retarder mechanism (W; W*), to the second polarizing mechanism (P2, P3; P*2, P*3) for incurring at least one polarization operation among the second and third polarization operations and then be imaged on one (C; C") of the at least one camera sensor so as to obtain a Q-quadrature image, and another part of said incident light is transmitted to the second polarizing mechanism (P2, P3; P*2, P*3) for incurring at least one polarization operation among the second and third polarization operations and then be imaged on one (C, C'; C") of the at least one camera sensor to obtain an I-quadrature image,
   and wherein the optical receiver further includes circuitry configured to simultaneously acquire the light beams used to obtain the I-quadrature image and the Q-quadrature image and further configured to perform the full-field quadrature demodulation on the basis of said I-quadrature and Q-quadrature images.

2. The optical receiver according to claim 1, wherein the optical receiver further includes a first converging lens (L1) placed between the first polarizing mechanism (P1) and the electro-optic modulator (EOM) so as to form an image at the location of the electro-optic modulator (EOM).

3. The optical receiver according to any one of claims 1 and 2, wherein the beam-splitting mechanism (BS2) is a polarization-insensitive Fresnel biprism, and wherein a single camera sensor (C) is used to simultaneously acquire the light beams used to obtain the Q-quadrature and I-quadrature images, the Q-quadrature image being formed on one half of the surface of the camera sensor (C) from the light beam having incurred the second polarization operation after having passed via the quarter-wave retarder mechanism (W) and the I-quadrature image being formed on the other half of the surface of the camera sensor (C) from the light beam having incurred the third polarization operation.

4. The optical receiver according to any one of claims 1 and 2, wherein the beam-splitting mechanism (BS1) is a cube made from two triangular glass prisms which are glued together at their bases using a resin layer of polyester, or epoxy, or urethane-based adhesive, having a thickness adjusted such that, independently of incident light's polarization state, half of incident light is reflected and consequently output via a face of the cube for then incurring the third polarization operation, and the other half of the incident light is transmitted via another face of the cube for then passing via the quarter-wave retarder mechanism (W) before incurring the second polarization operation, and wherein one camera sensor (C) is used to capture the Q-quadrature image and another camera sensor (C') is used to capture the I-quadrature images.

5. The optical receiver according to any one of claims 1 and 2, wherein the beam-splitting mechanism (BS2) is achieved by a polarization-insensitive Fresnel biprism and the second polarizing mechanism is achieved by a Wollaston prism, and wherein a single camera sensor (C) is used to simultaneously acquire the light beams used to obtain the Q-quadrature and I-quadrature images, wherein a first transitional image is formed on one quarter (C*1 of the surface of the camera sensor (C) from light beam having incurred the second polarization after having passed via the quarter-wave retarder mechanism (W), a second transitional image is formed on another quarter (C*2) of the surface of the camera sensor (C) from light beam having incurred the third polarization operation after having passed via the quarter-wave retarder mechanism (W), a third transitional image is formed on yet another quarter (C*3) of the surface of the camera sensor (C) from light beam having incurred the second polarization operation without having passed via the quarter-wave retarder mechanism (W) and a fourth transitional image is formed on yet another quarter (C*4) of the surface of the camera sensor (C) from light beam having incurred the third polarization operation without having passed via the quarter-wave retarder mechanism (W),
and wherein the circuitry is further configured to obtain the Q-quadrature image by subtracting, on a per pixel basis, the second transitional image from the first transitional image, and to obtain the I-quadrature image by subtracting, on a per pixel basis, the fourth transitional image from the third transitional image.

6. The optical receiver according to any one of claims 1 to 5, wherein a second converging lens (L2) is placed between the electro-optic modulator (EOM) and the beam-splitting mechanism (BS1, BS2) so as to input collimated light into the beam-splitting mechanism (BS1, BS2).

7. The optical receiver according to any one of claims 1 and 2, wherein a single camera sensor (C") is used to simultaneously acquire the light beams used to obtain the Q-quadrature and I-quadrature images, and the beam-splitting mechanism is achieved by dividing the surface of the camera sensor into adjacent macro-pixels, which are 2 x 2 blocks of adjacent pixels, and by applying different optical processes on the pixels of each macro-pixel (MP), wherein the quarter-wave retarder mechanism is achieved by a quarter-wave retarder (W*) placed on first (Px1) and second (Px2) pixels of each macro-pixel (MP), the second polarization is achieved by a polarizer (P*2) placed on the first (Px1) and third (Px3) pixels of each macro-pixel (MP), the third polarization is achieved by a polarizer (P*3) placed on the second (Px2) and fourth (Px4) pixels of each macro-pixel (MP),
wherein the circuitry is further configured to form a first transitional image by gathering the first pixels of all macro-pixels, a second transitional image by gathering the second pixels of all macro-pixels, a third transitional image by gathering the third pixels of all macro-pixels, and a fourth transitional image by gathering the fourth pixels of all macro-pixels,
and wherein the circuitry is further configured to obtain the Q-quadrature image by subtracting, on a per pixel basis, the second transitional image from the first transitional image, and to obtain the I-quadrature image by subtracting, on a per pixel basis, the fourth transitional image from the third transitional image.

8. The optical receiver according to any one of claims 1 to 7, wherein the circuitry of the optical receiver is configured to determine, for each pixel position $p$ of the Q-quadrature and I-quadrature images, information $Inf_a(p)$ representative of a magnitude of a potential modulated light signal present at said pixel position as follows:

$$Inf_a(p) = \sqrt{\left(Int_Q(p)\right)^2 + \left(Int_I(p)\right)^2}$$

wherein $Int_Q(p)$ represents intensity present at said pixel position $p$ in the Q-quadrature image and $Int_I(p)$ represents intensity present at said pixel position $p$ in the I-quadrature image.

9. The optical receiver according to claim 8, wherein the circuitry of the optical receiver is configured to determine, for each pixel position at which said magnitude is above a predefined threshold, information $Inf_\varphi(p)$ representative of a phase $\varphi$ of said modulated light signal as follows:

$$Inf_\varphi(p) = \arctan\left(Int_Q(p)/Int_I(p)\right)$$

10. The optical receiver according to any one of claims 1 to 9, wherein the electro-optic modulator (EOM) is built from one component among the followings: an electro-optic crystal, an electro-optic polymer, an electro-optic ceramic, an electro-optic liquid cell, and a liquid crystal cell.

11. The optical receiver according to any one of claims 1 to 10, wherein the circuitry of the optical receiver is configured to acquire the Q-quadrature and I-quadrature images, and perform the quadrature demodulation, on a regular basis.

**Patentansprüche**

1. Optischer Empfänger zum Durchführen einer vollflächigen Quadraturdemodulation von modulierten Lichtsignalen, wobei der optische Empfänger einen ersten polarisierenden Mechanismus (P1) zum Durchführen einer ersten Polarisationsoperation und einen zweiten polarisierenden Mechanismus (P2, P3) zum Durchführen einer zweiten und dritten Polarisationsoperation, einen strahlteilenden Mechanismus (BS1; BS2), einen elektrooptischen Modulator (EOM), einen Viertelwellen-Verzögerermechanismus (W; W*) und mindestens einen Kamerasensor (C, C', C") enthält,
wobei der elektrooptische Modulator (EOM) zwischen dem ersten polarisierenden Mechanismus (P1) und dem strahlteilenden Mechanismus (BS1; BS2) platziert ist,
wobei der elektrooptische Modulator (EOM) eine schnelle Achse aufweist, die unter fünfundvierzig Grad bezüglich einer Polarisationsachse des ersten polarisierenden Mechanismus (P1) orientiert ist, der Viertelwellen-Verzögerermechanismus (W; W*) eine schnelle und langsame Achse aufweist, die die gleiche Orientierung wie die jeweiligen des elektrooptischen Modulators (EOM) aufweisen, wobei der zweite polarisierende Mechanismus (P2, P3; P*2, P*3) dafür ausgebildet ist, die zweite Polarisationsoperation gemäß einer mit der Polarisationsachse des ersten polarisierenden Mechanismus (P1) identischen Polarisationsachse oder orthogonal dazu durchzuführen und die dritte Polarisationsoperation gemäß einer mit der Polarisationsachse des ersten polarisierenden Mechanismus (P1) identischen Polarisationsachse oder orthogonal dazu durchzuführen,
wobei der strahlteilende Mechanismus (BS1, BS2) einen einfallenden Lichtstrahl, der durch den elektrooptischen Modulator (EOM) übertragen wird, derart trennt, dass ein Teil des einfallenden Lichts über dem Viertelwellen-Verzögerermechanismus (W; W*) zu dem zweiten polarisierenden Mechanismus (P2, P3; P*2, P*3) übertragen wird zum Unterziehen mindestens einer Polarisationsoperation unter der zweiten und dritten Polarisationsoperation und dann abgebildet zu werden auf einen (C; C") des mindestens einen Kamerasensors, um ein Q-Quadraturbild zu erhalten, und ein anderer Teil des einfallenden Lichts zu dem zweiten polarisierenden Mechanismus (P2, P3; P*2, P*3) übertragen wird zum Unterziehen mindestens einer Polarisationsoperation unter der zweiten und dritten Polarisationsoperation und dann abgebildet zu werden auf einen (C, C'; C") des mindestens einen Kamerasensors, um ein I-Quadraturbild zu erhalten,
und wobei der optische Empfänger weiterhin eine Schaltungsanordnung enthält, die dafür ausgebildet ist, simultan die Lichtstrahlen zu erfassen, die zum Erhalten des I-Quadraturbilds und des Q-Quadraturbilds verwendet werden, und weiter dafür ausgebildet ist, die vollflächige Quadraturdemodulation auf Basis des I-Quadratur- und Q-Quadraturbilds durchzuführen.

2. Optischer Empfänger nach Anspruch 1, wobei der optische Empfänger weiterhin eine erste konvergierende Linse (L1) enthält, die zwischen dem ersten polarisierenden Mechanismus (P1) und dem elektrooptischen Modulator (EOM) platziert ist, um ein Bild an dem Ort des elektrooptischen Modulators (EOM) auszubilden.

3. Optischer Empfänger nach einem der Ansprüche 1 und 2, wobei der strahlteilende Mechanismus (BS2) ein Polarisations-unempfindliches Fresnel-Biprisma ist, und wobei ein einzelner Kamerasensor (C) verwendet wird, um die Lichtstrahlen simultan zu erfassen, die verwendet werden, um das Q-Quadratur- und I-Quadraturbild zu erhalten, wobei das Q-Quadraturbild auf einer Hälfte der Oberfläche des Kamerasensors (C) aus dem Lichtstrahl gebildet wird, der sich der zweiten Polarisationsoperation unterzogen hat, nachdem er den Viertelwellen-Verzögerermechanismus (W) durchlaufen hat, und das I-Quadraturbild auf der anderen Hälfte der Oberfläche des Kamerasensors (C) aus dem Lichtstrahl gebildet wird, der sich der dritten Polarisationsoperation unterzogen hat.

4. Optischer Empfänger nach einem der Ansprüche 1 und 2, wobei der strahlteilende Mechanismus (BS1) ein Cubus ist, der aus zwei dreieckigen Glasprismen besteht, die an ihren Basen unter Verwendung einer Harzschicht aus Polyester oder Epoxid oder einem Urethan-basierten Kleber mit einer Dicke aneinandergeklebt sind, die derart angepasst ist, dass unabhängig von dem Polarisationszustand von einfallendem Licht die Hälfte des einfallenden Lichts reflektiert und folglich über eine Fläche des Cubus ausgegeben wird, um sich dann der dritten Polarisationsoperation zu unterziehen, und die andere Hälfte des einfallenden Lichts über eine andere Fläche des Cubus übertragen wird, um dann den Viertelwellen-Verzögerermechanismus (W) zu durchlaufen, bevor er sich der zweiten Polarisationsoperation unterzieht, und wobei ein Kamerasensor (C) verwendet wird, um das Q-Quadraturbild zu erfassen, und ein anderer Kamerasensor (C') verwendet wird, um die I-Quadraturbilder zu erfassen.

5. Optischer Empfänger nach einem der Ansprüche 1 und 2, wobei der strahlteilende Mechanismus (BS2) durch ein Polarisations-unempfindliches Fresnel-Biprisma erzielt wird und der zweite polarisierende Mechanismus durch ein Wollaston-Prisma erzielt wird und wobei ein einzelner Kamerasensor (C) verwendet wird, um simultan die Lichtstrahlen zu erfassen, die verwendet werden, um die Q-Quadratur- und I-Quadraturbilder zu erhalten, wobei ein erstes Übergangsbild auf einem Viertel (C*1) der Oberfläche des Kamerasensors (C) aus einem Lichtstrahl gebildet wird, der sich der zweiten Polarisation unterzogen hat, nachdem er den Viertelwellen-Verzögerermechanismus (W) durchlaufen hat, ein zweites Übergangsbild auf einem anderen Viertel (C*2) der Oberfläche des Kamerasensors (C) aus einem Lichtstrahl gebildet wird, der sich der dritten Polarisationsoperation unterzogen hat, nachdem er den Viertelwellen-Verzögerermechanismus (W) durchlaufen hat, ein drittes Übergangsbild auf noch einem anderen Viertel (C*3) der Oberfläche des Kamerasensors (C) aus einem Lichtstrahl gebildet wird, der sich der zweiten Polarisationsoperation unterzogen hat, ohne dass er den Viertelwellen-Verzögerermechanismus (W) durchlaufen hat, und ein viertes Übergangsbild auf noch einem anderen Viertel (C*4) der Oberfläche des Kamerasensors (C) aus Licht gebildet wird, das sich der dritten Polarisationsoperation unterzogen hat, ohne den Viertelwellen-Verzögerermechanismus (W) durchlaufen zu haben,

und wobei die Schaltungsanordnung weiterhin dafür ausgebildet ist, das Q-Quadraturbild durch Subtrahieren, auf einer Basis pro Pixel, des zweiten Übergangsbilds von dem ersten Übergangsbild zu erhalten und das I-Quadraturbild durch Subtrahieren, auf einer Basis pro Pixel, des vierten Übergangsbilds von dem dritten Übergangsbild zu erhalten.

6. Optischer Empfänger nach einem der Ansprüche 1 bis 5, wobei eine zweite konvergierende Linse (L2) zwischen dem elektrooptischen Modulator (EOM) und dem strahlteilenden Mechanismus (BS1, BS2) platziert ist, um kollimiertes Licht in den strahlteilenden Mechanismus (BS1, BS2) einzugeben.

7. Optischer Empfänger nach einem der Ansprüche 1 und 2, wobei ein einzelner Kamerasensor (C") verwendet wird, um simultan die Lichtstrahlen zu erfassen, die verwendet werden, um das Q-Quadratur- und I-Quadraturbild zu erhalten, und der strahlteilende Mechanismus erzielt wird durch Unterteilen der Oberfläche des Kamerasensors in benachbarte Makropixel, die 2 x 2-Blöcke von benachbarten Pixeln sind, und durch Anwenden verschiedener optischer Prozesse auf die Pixel jedes Makropixels (MP),

wobei der Viertelwellen-Verzögerermechanismus durch einen Viertelwellenverzögerer (W*) erzielt wird, der auf einem ersten (Px1) und zweiten (Px2) Pixel jedes Makropixels (MP) platziert ist, die zweite Polarisation durch einen Polarisierer (P*2) erzielt wird, der auf dem ersten (Px1) und dritten (Px3) Pixel jedes Makropixels (MP) platziert ist, die dritte Polarisation durch einen Polarisierer (P*3) erzielt wird, der auf dem zweiten (Px2) und vierten (Px4) Pixel jedes Makropixels (MP) platziert ist,

wobei die Schaltungsanordnung weiterhin dafür ausgebildet ist, ein erstes Übergangsbild durch Sammeln der ersten Pixel aller Makropixel, ein zweites Übergangsbild durch Sammeln der zweiten Pixel aller Makropixel, ein drittes Übergangsbild durch Sammeln der dritten Pixel aller Makropixel und ein viertes Übergangsbild durch Sammeln der vierten Pixel aller Makropixel zu bilden,

und wobei die Schaltungsanordnung weiterhin dafür ausgebildet ist, das Q-Quadraturbild zu erhalten durch Subtrahieren, auf einer Basis pro Pixel, des zweiten Übergangsbilds von dem ersten Übergangsbild, und zum Erhalten des I-Quadraturbilds durch Subtrahieren, auf einer Basis pro Pixel, des vierten Übergangsbilds von dem dritten Übergangsbild.

8. Optischer Empfänger nach einem der Ansprüche 1 bis 7, wobei die Schaltungsanordnung des optischen Empfängers dafür ausgebildet ist, für jede Pixelposition $p$ des Q-Quadratur- und I-Quadraturbilds, Informationen $Inf_a(p)$ zu be-

stimmen, die eine Größe eines an der Pixelposition vorliegenden potentiellen modulierten Lichtsignals darstellen, wie folgt:

$$Inf_a(p) = \sqrt{\left(Int_Q(p)\right)^2 + \left(Int_I(p)\right)^2}$$ ,

wobei $Int_Q(p)$ die an der Pixelposition $p$ in dem Q-Quadraturbild vorliegende Intensität darstellt und $Int_I(p)$ die an der Pixelposition $p$ in dem I-Quadraturbild vorliegende Intensität darstellt.

9. Optischer Empfänger nach Anspruch 8, wobei die Schaltungsanordnung des optischen Empfängers dafür ausgebildet ist, für jede Pixelposition, bei der die Größe über einem vordefinierten Schwellwert liegt, Informationen $Inf_\varphi(p)$ zu bestimmen, die eine Phase φ des modulierten Lichtsignals darstellen, wie folgt:

$$Inf_\varphi(p) = \arctan\left(Int_Q(p)/Int_I(p)\right)$$

10. Optischer Empfänger nach einem der Ansprüche 1 bis 9, wobei der elektrooptische Modulator (EOM) aus einer Komponente unter den folgenden konstruiert ist: ein elektrooptischer Kristall, ein elektrooptisches Polymer, eine elektrooptische Keramik, eine elektrooptische Flüssigkeitszelle und eine Flüssigkristallzelle.

11. Optischer Empfänger nach einem der Ansprüche 1 bis 10, wobei die Schaltungsanordnung des optischen Empfängers dafür ausgebildet ist, das Q-Quadratur- und I-Quadraturbild zu erfassen und die Quadraturdemodulation durchzuführen, auf einer regelmäßigen Basis.

**Revendications**

1. Un récepteur optique destiné à réaliser une démodulation en quadrature plein champ de signaux lumineux modulés, le récepteur optique comportant un premier mécanisme de polarisation (P1) destiné à effectuer une première opération de polarisation et un second mécanisme de polarisation (P2, P3) destiné à effectuer des seconde et troisième opérations de polarisation, un séparateur de faisceaux (BS1, BS2), un modulateur électro-optique (EOM), un mécanisme à retard quart d'onde (W, W*) et au moins un capteur d'images (C, C', C"),
dans lequel le modulateur électro-optique (EOM) est placé entre le premier mécanisme de polarisation (P1) et le séparateur de faisceaux (BS1, BS2),
dans lequel le modulateur électro-optique (EOM) comporte un axe rapide orienté à quarante-cinq degrés par rapport à un axe de polarisation du premier mécanisme de polarisation (P1), le mécanisme à retard quart d'onde (W, W*) comporte des axes lent et rapide qui ont la même orientation que les axes respectifs du modulateur électro-optique (EOM), le second mécanisme de polarisation (P2, P3; P*2, P*3) est configuré pour effectuer la seconde opération de polarisation selon un axe de polarisation identique ou orthogonal à l'axe de polarisation du premier mécanisme de polarisation (P1) et pour effectuer la troisième opération de polarisation selon un axe de polarisation identique ou orthogonal à l'axe de polarisation du premier mécanisme de polarisation (P1),
dans lequel le séparateur de faisceaux (BS1, BS2) sépare un faisceau lumineux incident qui est transmis par le modulateur électro-optique (EOM) de sorte qu'une partie dudit faisceau lumineux incident est transmise, à travers le mécanisme à retard quart d'onde (W, W*), vers le second mécanisme de polarisation (P2, P3; P*2, P*3) pour subir au moins une opération de polarisation parmi les seconde et troisième opérations de polarisation puis est imagée sur un des au moins un capteur d'images (C, C") afin d'obtenir une image en quadrature de phase Q, et une autre partie dudit faisceau lumineux incident est transmise vers le second mécanisme de polarisation (P2, P3; P*2, P*3) pour subir au moins une opération de polarisation parmi les seconde et troisième opérations de polarisation puis est imagée sur un des au moins un capteur d'images (C, C', C") afin d'obtenir une image en phase I, et dans lequel le récepteur optique comporte en outre de la circuiterie configurée pour acquérir simultanément les faisceaux lumineux utilisés pour obtenir l'image en phase I et l'image en quadrature de phase Q, et configurée en outre pour effectuer la démodulation en quadrature plein champ sur la base desdites images en phase I et en quadrature de phase Q.

2. Récepteur optique selon la revendication 1, dans lequel le récepteur optique comporte en outre une première lentille convergente (L1) placée entre le premier mécanisme de polarisation (P) et le modulateur électro-optique (EOM) de manière à former une image à l'emplacement du modulateur électro-optique.

3. Récepteur optique selon l'une quelconque des revendications 1 et 2, dans lequel le séparateur de faisceaux (BS2) est un double prisme de Fresnel insensible à la polarisation, et dans lequel un seul capteur d'images (C) est utilisé pour acquérir simultanément les faisceaux lumineux utilisés pour obtenir les images en phase I et en quadrature de phase Q, l'image en quadrature de phase Q étant formée sur une moitié de la surface du capteur d'images (C) à partir du faisceau lumineux ayant subi la seconde opération de polarisation après avoir traversé le mécanisme à retard quart d'onde (W) et l'image en phase I étant formée sur l'autre moitié de la surface du capteur d'images (C) à partir du faisceau lumineux ayant subi la troisième opération de polarisation.

4. Récepteur optique selon l'une quelconque des revendications 1 et 2, dans lequel le séparateur de faisceaux (BS1) est un cube formé par deux prismes triangulaires qui sont collés ensemble à leurs bases à l'aide d'une couche en résine polyester, ou epoxy, ou d'adhésif à base d'uréthane, ayant une épaisseur ajustée de telle sorte que, indépendamment d'un état de polarisation d'une lumière incidente, la moitié de la lumière incidente est réfléchie et donc réémise par une face du cube pour ensuite subir la troisième opération de polarisation, et l'autre moitié de la lumière incidente est transmise à travers une autre face du cube pour ensuite passer à travers le mécanisme à retard quart d'onde (W) avant de subir la deuxième opération de polarisation, et dans lequel un capteur d'images (C) est utilisé pour acquérir l'image en quadrature de phase Q et un autre capteur d'images (C') est utilisé pour acquérir les images en phase I.

5. Récepteur optique selon l'une quelconque des revendications 1 et 2, dans lequel le séparateur de faisceaux (BS2) est réalisé avec par un double prisme de Fresnel insensible à la polarisation et le second mécanisme de polarisation est réalisé avec un prisme de Wollaston, et dans lequel un seul capteur d'images (C) est utilisé pour acquérir simultanément les faisceaux lumineux utilisés pour obtenir les images en quadrature de phase Q et en phase I, dans lequel une première image temporaire est formée sur un quart (C*1) de la surface du capteur d'images (C) à partir du faisceau lumineux ayant subi la deuxième opération de polarisation après être passé à travers le mécanisme à retard quart d'onde (W), une deuxième image temporaire est formée sur un autre quart (C*2) de la surface du capteur d'images (C) à partir du faisceau lumineux ayant subi la troisième opération de polarisation après être passé à travers le mécanisme à retard quart d'onde (W), une troisième image temporaire est formé sur encore un autre quart (C*3) de la surface du capteur d'images (C) à partir du faisceau lumineux ayant subi la seconde opération de polarisation sans être passé à travers le mécanisme à retard quart d'onde (W) et une quatrième image temporaire est formée sur encore un autre quart (C*4) de la surface du capteur d'images (C) à partir du faisceau lumineux ayant subi la troisième opération de polarisation sans être passé à travers le mécanisme à retard quart d'onde (W), et dans lequel la circuiterie est en outre configurée pour obtenir l'image en quadrature de phase Q en soustrayant, pixel par pixel, la deuxième image temporaire de la première image temporaire, et pour obtenir l'image en phase I en soustrayant, pixel par pixel, la quatrième image temporaire de la troisième image temporaire.

6. Récepteur optique selon l'une quelconque des revendications 1 à 5, dans lequel une seconde lentille convergente (L2) est placée entre le modulateur électro-optique (EOM) et le séparateur de faisceaux (BS1, BS2) de manière à faire entrer une lumière collimatée dans le séparateur de faisceaux (BS1, BS2).

7. Récepteur optique selon l'une quelconque des revendications 1 et 2, dans lequel un seul capteur d'images (C") est utilisé pour acquérir simultanément les faisceaux lumineux utilisés pour obtenir les images en quadrature de phase Q et en phase I, et le séparateur de faisceaux est réalisé en divisant la surface du capteur d'images en macro-pixels adjacents, qui sont 2 x 2 blocs de pixels adjacents, et en appliquant différents procédés optiques sur les pixels de chaque macro-pixel (MP),
dans lequel le mécanisme à retard quart d'onde est réalisé par une lame à retard quart d'onde (W*) placée sur un premier (Px1) et un second (Px2) pixels de chaque macro-pixel (MP), la seconde opération de polarisation est réalisée par un polariseur (P*2) placé sur le premier (Px1) pixel et sur un troisième (Px3) pixel de chaque macro-pixel (MP), la troisième opération de polarisation est réalisée par un polariseur (P*3) placé sur le second (Px2) pixel et sur un quatrième (Px4) pixel de chaque macro-pixel (MP),
dans lequel la circuiterie est configurée pour former une première image temporaire en collectant les premiers pixels de tous les macro-pixels, une deuxième image temporaire en collectant les seconds pixels de tous les macro-pixels, une troisième image temporaire en collectant les troisièmes pixels de tous les macro-pixels, et une quatrième image temporaire en collectant les quatrièmes pixels de tous les macro-pixels,
et dans lequel la circuiterie est configurée pour obtenir l'image en quadrature de phase Q en soustrayant, pixel par pixel, la deuxième image temporaire de la première image temporaire et pour obtenir l'image en phase I en soustrayant, pixel par pixel, la quatrième image temporaire de la troisième image temporaire.

8. Récepteur optique selon l'une quelconque des revendications 1 à 7, dans lequel la circuiterie du récepteur optique est configurée pour déterminer, pour chaque position p de pixel des images en quadrature de phase Q et en phase I, une information $Inf_a(p)$ représentative d'une amplitude d'un éventuel signal lumineux modulé présent à ladite position de pixel selon :

$$Inf_a(p) = \sqrt{\left(Int_Q(p)\right)^2 + \left(Int_I(p)\right)^2}$$

dans lequel $Int_Q(p)$ représente une intensité présente à ladite position $p$ de pixel dans l'image en quadrature de phase Q et $Int_I(p)$ représente une intensité présente à ladite position $p$ de pixel dans l'image en phase I.

9. Récepteur optique selon la revendication 8, dans lequel la circuiterie du récepteur optique est configurée pour déterminer, pour chaque position de pixel à laquelle ladite amplitude dépasse un seuil prédéfini, une information $Inf_\varphi(p)$ représentative d'une phase $\varphi$ dudit signal lumineux modulé selon :

$$Inf_\varphi(p) = \arctan\left(Int_Q(p)/Int_I(p)\right)$$

10. Récepteur optique selon l'une quelconque des revendications 1 à 9, dans lequel le modulateur électro-optique (EOM) est fabriqué avec un composant parmi les suivants : un cristal électro-optique, un polymère électro-optique, une céramique électro-optique, une cellule liquide électro-optique, et une cellule à cristaux liquides.

11. Récepteur optique selon l'une quelconque des revendications 1 à 10, dans lequel la circuiterie du récepteur optique est configurée pour acquérir les images en quadrature de phase Q et en phase I, et pour effectuer une démodulation de phase en quadrature de manière régulière.

Fig. 1

Fig. 2A

Fig. 2B

Fig. 3A

Fig. 3B

Fig. 4A

Fig. 4B

Fig. 4C

Aquiring images in quadrature    S1

Determining, for each pixel position, a
signal magnitude    S21

Determining, for each pixel position, a
signal phase    S22

S2

Post-processing    S3

Fig. 5

203
HDD

204
COM

200
CPU

201
RAM

202
ROM

210

Fig. 6

a

b

**EP 3 455 961 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1686707 A2

- US 20110552212 A1

**Non-patent literature cited in the description**

- Liquid crystal polymer full-stokes division of focal plane polarimeter. **GRAHAM MYHRE et al.** Optics Express. OSA Publishing, November 2012, vol. 20, 27393-27409

c

d

e

23